# EUROPEAN PATENT APPLICATION

(11) **EP 0 730 990 A1**
(43) Date of publication of application: **11.09.1996**
(21) Application number: 96500028.4
(22) Date of filing: 06.03.1996
(51) Int. Cl.: B60J 10/00

(54) **Improved sealing gasket, applicable as wheather-strip or similar to automotive vehicles**

(30) Priority: 07.03.1995 ES 9500596
(71) Applicant: Gomez Barragan, Amelia, E-28006 Madrid (ES)
(72) Inventor: Gomez Barragan, Amelia, E-28006 Madrid (ES)
(74) Representative: Munoz Garcia, Antonio

(57) **Abstract**

Improved tightness gasket applicable as weather strip or similar to automotive vehicles consisting of a stiff plastic material acting as an inner portion or core thereof, having two inner protuberances (2'), with a = plastic enveloping (3), fitted with two protuberances (4) and (4'), the plastic enveloping (3) presenting a circular plan area (6) configured like a cylinder, said protu berances or projections (4) and (4') being supported on said plastic protuberances (2'), and acting as supporting elements of said areas (4) and (4').

## Description

### BACKGROUND OF THE INVENTION

The present specification refers to a Model of Utility related to an improved sealing gasket, applicable as a weather-strip or similar to automotive vehicles, the evident purpose of which is to be configured as a plate glass licker, which, acting as a sealing gasket for sliding surfaces, movable glasses or similar located at automotive vehicles doors, is incorporated in external or internal ares, acting, at the same time, as a plate glass guide, which, instead of having a frame adopting a "U" shape, inserted in a rubber or thermoplastic material used for being fixed to the doors, it - uses a plastic material frame of particular characteristics, achieving, upon extruding separately a plastic or rigid profile and other rubber profile, the formation of a monoblock assembly when being - mechanically inserted, after the extrusion, and allowing it to be applied to the adequate area without any type of problems, due to the fact that the geometry displayed by the configuration obtained from the two bonded elements allows a great rigidity to be obtained derived from the plastic and rubbery materials, so allowing it to be used and incorporated in a standardized manner, by using robot means, achieving at the same time a very simple manufacture and a substantial reduction in cost, and, apart from its possible robotization, a superior handling.

### FIELD OF THE INVENTION

This invention has an application in the industry devoted to the manufacture of transformed elements starting from plastic, rubber and derivated materials.

### SUMMARY OF THE INVENTION

The improved sealing gasket, applicable as a weather-strip or similar to automotive vehicles, which is the object of the invention, constitutes per se an evident novelty in the industrial field to which it incorporates, since thanks to it, it is possible to relay on a body which is able to be robotized, and having, furthermore, adequate characteristics surpassing the present configuration of this type of gaskets obtained starting from the rubber extrusion, - incorporating within same a metal frame when being extruded.

In a more definite way, the improved sealing gasket, applicable as a weather-strip or similar to automotive vehicles, is constituted as a weather-strip or sealing gasket applicable in every kind of movable doors, windows or closures, specially to be applied as sealing elements in automotive vehicles, which can be mobilized - starting from any type of power, one of the special features of - the invention being the possibility of replacing the metal insert or core, constituted as a steel band, that, by adopting different forms or perforations is used until now by all weather-strips or sealing gaskets employed for analagous purposes, the metal insert or core, formed by a steel band, being replaced by a platic material body or element, fitted with forms and dimensions which are estimated for every particular case.

The above sealing gasket is composed of two essential parts, one of them to be named as fastening weather-strip thereinafter, and a second part to be next named as tubular part.

The fastening weather-strip acts as an assembly for the parts to be sealed, while the tubular part provides really a sealing.

The tubular part is fitted with any geometric section considered as adequate, independently of the fact that it can be trapezial, circular, oval, and having or not inner divisions.

The geometric section constituting the tubular part can be located at the side or upper portion of the weather-strip united to it forming a single assembly or monoblock body, and special forms of a determinate section for every case, in which fixing, releasing and sealing devices are contemplated, which serve also for allowing said fastening weather-strip to be housed.

The fastening weather-strip is made in a plastic material in any of its types, according to the strengths or strains desired to be obtained, and will be arranged in a manner similar to a "U", materializing the sealing gasket with the measures to be determined, and one of its features is the existence of inner fins or skids in order to reinforce even more, if possible, the desired sealing.

The second part constituting the tubular part or assembly of elements of sealing tube will be made of an elastic material, usually on the basis of formulae corresponding to synthetic rubber or thermoplastics, extruded or not, and can be of different colours.

In a more general way, the tubular portion compressed on closing will be made of microporous rubber, and the rest of the assembly can have spongy or solid material, according to the desired application, with or without colours.

The area in which the fastening weather-strip or wrapping zone of the sealing gasket is housed, is fitted with special fins, - variable both in number and forms, the function of which is, in addition, to provide a sealing, to obtaing a sufficient weatherstrip extraction effort, depending on, in turn, the fact that no great effort will be necessary for placing or mounting it, and to allow a conventional robotism to be performed.

### BRIEF DESCRIPTION OF THE DRAWINGS

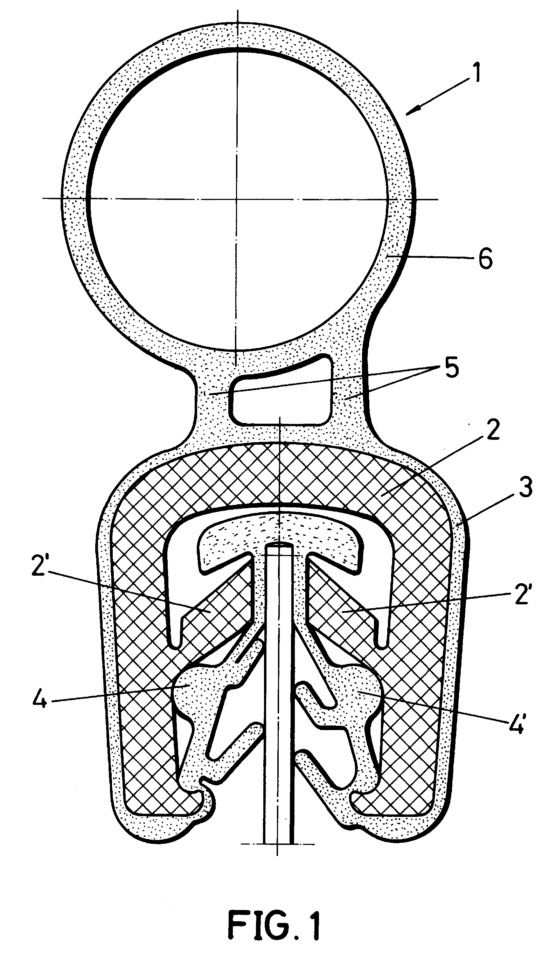

In order to complement this description and aid to a better understanding of the characteristics of the invention, the appending single drawing, which is a part of this specification, shows by way of illustrative sand non-limiting example, the following:

Single figure: it shows a front elevational view, duly sectioned, of the improved sealing gasket, applicable as a weather-strip or similar, to automotive vehicles.

### DETAILED DESCRIPTION OF THE PREFERRED EMBODIMENT

From the single figure, it can be seen how the improved sealing gasket (1), applicable as a weather-strip or similar, to automotive vehicles, is constituted starting from a body (2), made of a riplastic material, presenting internally two adequate protuberances (2'), the function of which is to fix two projections (4) and (4'), existing within the wrapping body (3), made of a light plastic material having at the upper side a neck (5) of union with a circular and spherical configured plan (6).

In short, the area (2) constituting the rigid core of the object of the invention referring to an improved sealing gasket, is made of a rigid plastic material and has a harmonic configuration with the area where the sealing gasket is to be incorporated, said matebeing externally coated with a coating (3) made of a light plastic material, from the inner part or terminal portions of which projections (4) and (4') emerge, which are supported by fastening fins - (2') emerging from the inner central part of the body (2).

The wrapping made of microporous rubber has projections (5) on the upper side of which a hollow cylindrical configuration (6) is located.

It is not considered necessary to extend this description for any skilled expert in the art to understand the scope of the invention and the advantages derived from it.

The materials, shape, size and arrangement of its components will be open to variation, provided that it does not imply any alteration to the essence of the invention.

The terms under which this specification has been described should be always taken in an ample and non-limitative sense.

## Claims

1. An improved sealing gasket, applicable as a weather-strip or similar, to automotive vehicles, characterized in that it is constituted by a core (2), made of a rigid plastic material, having internally two protuberances (2'), arranged in an adequate configuration, in which projections (4) and (4') are supported, emerging from a plastic wrapping (3), there being on this plastic wrapping (3) a circular plan (6) having a cylindrical configuration, there being at the lower portion of the plastic area (3), two harmonically ill-proportioned proyections (4) and (4'), suported on the plastic protuberances (2') acting as supporting elements of the ill-proportioned emerging areas (4) and (4').

2. An improved sealing gasket, applicable as a weather-strip or similar, to automotive vehicles, according to Claim 1, characterized in that the area where the fastening weather-strip (1), constituted by the wrapping (3), with its emerging projection (5), and the remaining configuration of circular plan (6), is fitted with special fins (4) and (4'), variable both in number and forms, providing sealing and, at the same time, allowing a good mounting due to its flexibility.
